# EUROPÄISCHE PATENTANMELDUNG

(11) **EP 2 159 179 A2**
(43) Veröffentlichungstag der Anmeldung: **03.03.2010**
(21) Anmeldenummer: 09008402.1
(22) Anmeldetag: 26.06.2009
(51) Int. Cl.: B65H 49/24, B65H 49/32

(54) **Transport- und Verlegevorrichtung für strangförmige Güter**

(30) Priorität: 01.09.2008 DE 202008011584 U
(71) Anmelder: Jakob Thaler GmbH, 25335 Elmshorn (DE)
(72) Erfinder: Marquardt, Harry, 24623 Grossenaspe (DE)
(74) Vertreter: Hausfeld, Norbert

(57) **Zusammenfassung**

Die Erfindung betrifft eine Transport- und Verlegevorrichtung (1) für ein zu einem Wickel (4) gewickeltes strangförmiges Gut wie z.B. Rohre oder Kabel, mit einem Fahrgestell (2) und einer auf dem Fahrgestell (2) angeordneten Haltekonstruktion (3) zur Aufnahme und Halterung des Wickels (4), wobei an der Haltekonstruktion (3) am vorderen und/oder hinteren Ende Anlagewalzen (7) angebracht sind, wobei die Haltekonstruktion (3) weiterhin seitlich links und rechts Tragarme (10) aufweist, die an ihrem einen Ende gefestigt sind und an deren anderen freien Ende (12) die Achse (17) eines Drehkörpers (13, 14, 16) drehgelagert ist, und ist **dadurch gekennzeichnet, dass** der Drehkörper aus zwei seitlichen Rädern (13) besteht, zwischen denen mehrere Querstangen (16) kreisförmig um die Achse (17) herum lös- und entfernbar befestigt sind.

## Beschreibung

Die Erfindung betrifft eine Transport- und Verlegevorrichtung für strangförmige Güter nach dem Oberbegriff des Anspruch 1.

Derartige Vorrichtungen werden eingesetzt, um zu einem Wickel gewickelte Rohre oder andere strangförmige Güter von einem Lagerort zu einem Einsatzort zu transportieren, wo sie in der Regel im Erdboden verlegt werden. Ein Beispiel für typische strangförmige Güter sind Kunststoffrohre, die zum Beispiel für die Durchleitung von Flüssigkeiten oder Gasen unteriridisch verlegt werden.

Rohrwickel bestehen typischerweise aus einer Anzahl von Windungen, die zum Beispiel mittels Bändern unter Spannung zusammengehalten sind. Nach Entfernen der Bänder würde der Rohrwickel aufspringen. Die Anforderungen an gattungsgemäße Vorrichtungen sind daher zum einen, dass sie zuverlässig gewickelte strangförmige Güter, z.B. Rohrwickel, aufnehmen können, ohne diese zu beschädigen. Gleichzeitig sollen die Wickel aber so gehalten und aufgenommen sein, dass nach Entfernen der Haltebänder keine unkontrollierte Expansion in alle Richtungen möglich ist.

Eine weitere Anforderung ist, dass das strangförmige Gut aus der Vorrichtung abroll- bzw. abwickelbar ist. Gattungsgemäße Vorrichtungen weisen daher geeignete Abwickel- und Rollenkonstruktionen auf.

Aus der DE 20 2005 020 441 U1 ist eine gattungsfremde Konstruktion mit einem Rollenkäfig bekannt. Parallel zur Rohrwickelachse sind mehrere Käfigrollen vorgesehen, die den Wickel umgeben und einschließen, und auf denen der Rohrwickel beim Abwickeln drehbar aufliegt. Es wird an diesem Stand der Technik als nachteilig angesehen, dass das Abwickeln in der Regel schwergängig ist, weil das gesamte Gewicht des Wickels im wesentlichen auf der bodenseitig angeordneten Käfigrolle geringen Durchmessers aufliegt. Das Beladen dieser gattungsfremden Vorrichtung mit einem Wickel ist hingegen relativ einfach möglich.

Aus der DE 295 06 998 U1 ist eine gattungsgemäße Vorrichtung bekannt, bei der der Wickel auf einer von Tragarmen gehaltenen Rolle lagert. Der Rohrwickel ist radial gegen Expansion gesichert durch endständig angeordnete Anschlagrollen. Es wird als nachteilig bei dieser Konstruktion angesehen, dass das Beladen relativ aufwendig ist, da zunächst die Rolle in das Rohrwickelinnere einzusetzen ist und beide zusammen dann zum Beispiel mittels eines Kranes oder mittels eines in diesem gattungsgemäßen deutschen Gebrauchsmuster dargestellten Schwenkladearmes aufzuladen ist. Das Abrollen hingegen ist leichtgängiger im Vergleich zur vorgenannten DE 20 2005 020 441 U1.

Es ist die Aufgabe der vorliegenden Erfindung, eine einfacher beladbare Vorrichtung bereitzustellen, die Wickel zuverlässig hält und aus der ein Wickel gut abwickelbar ist.

Diese Aufgabe wird mit einer gattungsgemäßen Transport- und Verlegevorrichtung mit den kennzeichnenden Merkmalen des Anspruchs 1 gelöst. Weitere vorteilhafte Ausgestaltungen sind in den Unteransprüchen angegeben.

Danach weist die erfindungsgemäße Transport- und Verlegevorrichtung wie auch bereits die DE 295 06 998 U1 einen von Tragarmen drehgelagert gehaltenen Drehkörper auf. Erfindungsgemäß besteht dieser Drehkörper aus zwei seitlichen Rädern, zwischen denen mehrere Querstangen befestigt werden können. Nach Befestigung sind diese Querstangen kreisförmig um die Drehachse des Drehkörpers herum angeordnet. Zum Beladen eines Wickels können die Querstangen demontiert werden, so dass ein Rohrwickel durch die beiden seitlichen Räder hindurch in die Vorrichtung geladen werden kann. Die beiden Räder können dabei entweder ebenfalls demontierbar ausgebildet werden, um zusätzlichen Platz für das Beladen zu schaffen, oder sie können dauerhaft an den Tragarmen drehgelagert sein. Jedes der Räder hat eine eigene Drehachse, die beide zusammen die Drehachse des Drehkörpers darstellen. Es ist anzumerken, daß unter der Bezeichnung "Räder" nicht nur kreisrunde Außenkonturen zu verstehen sind, sondern beliebige Polygonzüge.

Es wird mit der erfindungsgemäßen Ausgestaltung mit Vorteil erreicht, dass mit geringerem Aufwand ein Beladen der Vorrichtung mit einem Rohrwickel möglich ist. Gleichzeitig ist das Abwickeln des Rohrwickels in der gewünschten Weise leichtgängig möglich.

Nach den vorteilhaften Merkmalen des Anspruches 2 weisen die seitlichen Räder Befestigungseinrichtungen für die Querstangen auf. Dies können in einem einfachen Fall zum Beispiel Bohrungen sein, durch die hindurch sich eine Schraube zur Befestigung der Querstangen erstrecken kann. Es finden sich eine Mehrzahl von solchen Befestigungseinrichtungen für die Querstangen auf den seitlichen Rädern, die gruppenweise auf einem Kreis um die Achse des Drehkörpers herum angeordnet sind. Nach Anspruch 2 sind eine erste Gruppe von Befestigungseinrichtungen in einem ersten Kreisradiusabstand liegend vorgesehen und wenigstens eine weitere Gruppe von Befestigungseinrichtungen, die in Abstand eines zweiten Radiusses um die Drehachse herum angeordnet sind. Der erste Radius kann zum Beispiel kleiner als der zweite Radius sein. Es wird mit diesem Merkmal mit Vorteil erreicht, dass Rohrwickel mit unterschiedlicher Wickeldicke von dem Drehkörper gehalten werden können. Wenn zum Beispiel das strangförmige Gut einen relativ großen Durchmesser hat, können die Querstangen näher zur Drehachse des Drehkörpers befestigt werden, während bei Gütern mit geringerem Durchmesser die Querstangen weiter radial außen liegend an den Rädern befestigt werden können.

Mit den vorteilhaften Merkmalen des Anspruches 3 wird erreicht, dass der Drehkörper insgesamt weniger Gewicht hat, ohne dass dabei seine Stabilität leidet.

Mit den vorteilhaften Merkmalen des Anspruches 4 wird erreicht, dass eine einfache Montage und Demontage der Querstangen möglich ist. Diese werden einfach durch die Bohrung in den Speichen hindurch festgeschraubt.

Die Längsverstellbarkeit der Tragarme hat den Vorteil, dass Wickel mit unterschiedlichem Radius zuverlässig in der Vorrichtung aufgenommen sind. Bei Wickeln mit geringem Radius können die Tragarme geeignet verkürzt werden, während sie bei Wickeln mit großem Radius verlängerbar sind. In einfacher Ausgestaltung könnten dazu zum Beispiel die Tragarme austauschbar ausgebildet werden und Arme unterschiedlicher Länge eingesetzt werden. Vorteilhaft ist es aber, die Tragarme teleskopierbar auszubilden, weil dadurch die Längsverstellung vereinfacht ist. Insbesondere könnte das Teleskopieren hydraulisch erfolgen.

Mit den vorteilhaften Merkmalen des Anspruches 6 wird erreicht, dass zum Beladen die Anlagerollen optional entfernbar sind, so dass die Beladung nicht zwingend von oben erfolgen muss, sondern auch mit seitlicher Bewegung erfolgen kann. Die Abstandsveränderbarkeit hat den zusätzlichen Vorteil, dass die Anlagerollen bei Bedarf, also zum Beispiel bei Wickeln unterschiedlichen Durchmessers, an den Durchmesser des Wickels angepasst werden können. Bei teilweisem Abrollen des Wickels können die Anlagerollen auch nachgeführt werden. Dies kann zum Beispiel durch federbelastete Lagerung der Anlagerollen erfolgen. Die Anlagerollen können aber auch demontiert und in geeigneter Position neu montiert werden. Mit Vorteil sind die Anlagerollen daher gemäß Anspruch 7 mit Gerüstschellen an der Haltekonstruktion befestigt.

Mit Vorteil ist die Vorrichtung als Anhänger mit Anhängerkupplung ausgebildet, so dass sie in einfacher Weise an ein Zugfahrzeug angehängt und von diesem mitgezogen werden kann.

Für die zusätzliche seitliche Halterung des Rohrwickels sind die vorteilhaften Merkmale des Anspruches 9 vorgesehen. Der über den Radius des Kreises, auf dem die Querstangen um die Drehachse des Drehkörpers herum angeordnet sind, hinausreichende Bereich der seitlichen Räder kann als Anlagefläche für den Rohrwickel dienen, der also nicht seitlich vom Drehkörper herabrutschen kann.

Nachfolgend soll die Erfindung anhand eines Ausführungsbeispieles weiter erläutert werden, die in den Figuren schematisch und prinzipienhaft dargestellt ist. Gleiche Bezugszeichen stehen dabei für gleiche Teile. Es zeigen:
- Fig. 1: eine Prinzipdarstellung eines Ausführungsbeispiels einer erfindungsgemäßen Transport- und Verlegevorrichtung in Seitenansicht, und
- Fig. 2: eine Ansicht von oben auf das Ausführungsbeispiel der Fig. 1.

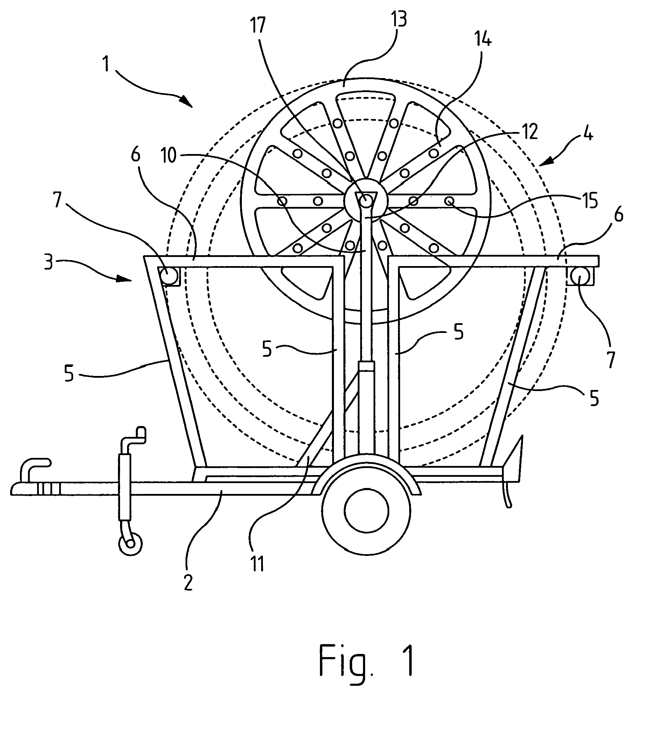

Das in Figur 1 dargestellte Ausführungsbeispiel besteht im wesentlichen aus einem Einachsfahrgestell 2, auf dem eine Stahlprofilkonstruktion 3 angeordnet ist, in die ein gestrichelt dargestellter Rohrwickel 4 eingebracht werden kann und die den Rohrwickel 4 aufnimmt und hält. Diese tragende Stahlprofilkonstruktion 3 besteht aus schräg oder vertikal zum horizontal angeordneten Einachsfahrgestell 2 verlaufenden Stützrohren 5, die horizontal verlaufende Stahlrohre 6 tragen. Eine solche Anordnung findet sich auf beiden Seiten des Fahrgestells 2. Zwischen dem vom Fahrgestell 2 entfernten Ende der beidseits des Fahrgestells 2 angeordneten Stahlprofilkonstruktion 3 kann quer zur Fahrgestellachse eine Schutzwalze 7 montiert werden. Diese endständig angeordneten Schutzwalzen 7 begrenzen einen eingesetzten Rohrwickel 4 zu den Enden hin, während die seitlichen Stahlprofile 5, 6 einen eingesetzten Rohrwickel 4 zur Seite hin eingrenzen. Da die Schutzwalzen 7 drehbar ausgebildet sind, kann ein anliegender Rohrwickel 4 beim Abziehen relativ reibungsverlustfrei rotieren.

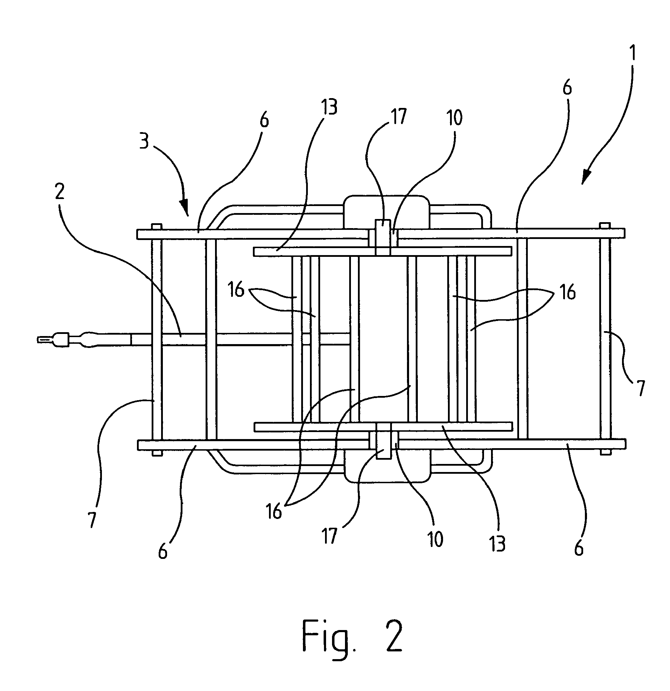

Etwa mittig auf dem Einachsfahrgestell 2 erstreckt sich vertikal zu beiden Seiten ein Aufnahmeständer 10 in die Höhe, der aus teleskopierbaren Schieberohren besteht. Die Aufnahmeständer sind jeweils durch eine Querstrebe 11 zusätzlich verstärkt. Am freien Ende 12 jedes der beiden Aufnahmeständer 10 ist ein Speichenrad 13 drehbar gelagert und verankert. In jeder der Speichen 14 sind Bohrungen 15 vorgesehen, durch die hindurch die in der Figur 2 besser erkennbaren Querstangen 16 festschraubbar sind. Die Montage der Querstangen 16 erfolgt dabei so, dass diese auf einem Kreisradius um die Drehachse 17 herum angeordnet sind.

Die Querspeichen 16 bilden nach Montage einen Kern, auf dem im eingesetzten Zustand dar Rohrwickel 4 ruht.

Zur Beladung des Transport- und Verlegewagens 1 sind die Querspeichen 16 zunächst zu demontieren, gegebenenfalls auch die Schutzwalzen 7. Zum Beispiel mittels eines Kranes wird dann ein Rohrwickel 4 eingesetzt und danach die Querspeichen 16, gegebenenfalls auch die Schutzwalzen 7, an geeigneter Position montiert. Der Rohrwickel 4 ruht dann mit seinem Innendurchmesser zumindest auf den oberen Querspeichen 16.

Zum Abwickeln wird der Rohrwickel 4 zum Beispiel heckseitig aus dem Wagen 1 herausgezogen, wobei sich der von den Speichenrädern 13 und den Querspeichen 16 gebildete Drehkörper bei Zug am Rohrwickelende mitdreht und die am Außenumfang des Rohrwickels anliegenden Schutzwalzen 7 ebenfalls eine Drehung ausführen.

## Patentansprüche

1. Transport- und Verlegevorrichtung (1) für ein zu einem Wickel (4) gewickeltes strangförmiges Gut wie z.B. Rohre oder Kabel, mit einem Fahrgestell (2) und einer auf dem Fahrgestell (2) angeordneten Haltekonstruktion (3) zur Aufnahme und Halterung des Wickels (4), wobei an der Haltekonstruktion (3) am vorderen und/oder hinteren Ende Anlagewalzen (7) angebracht sind, wobei die Haltekonstruktion (3) weiterhin seitlich links und rechts Tragarme (10) aufweist, die an ihrem einen Ende gefestigt sind und an deren anderen freien Ende (12) die Achse (17) eines Drehkörpers (13, 14, 16) drehgelagert ist, **dadurch gekennzeichnet, dass** der Drehkörper aus zwei seitlichen Rädern (13) besteht, zwischen denen mehrere Querstangen (16) kreisförmig um die Achse (17) herum lös- und entfernbar befestigt sind.

2. Transport- und Verlegevorrichtung (1) nach Anspruch 1, **dadurch gekennzeichnet, dass** die seitlichen Räder (13) eine erste Gruppe von ersten Befestigungseinrichtungen (15) für die Querstangen (16) aufweist, die im Abstand eines ersten Radius von der Achse (17) des Drehkörpers (13, 14, 16) auf einem ersten Kreis liegen, und dass die seitlichen Räder (13) mindestens eine weitere Gruppe von weiteren Befestigungseinrichtungen (15) aufweist, die in einem vom ersten Radius abweichenden Radius auf einem Kreis liegend von der Achse (17) des Drehkörpers (13, 14, 16) beabstandet angeordnet sind.

3. Transport- und Verlegevorrichtung (1) nach Anspruch 1 oder 2, **dadurch gekennzeichnet, dass** die seitlichen Räder Speichenräder (13, 14) sind.

4. Transport- und Verlegevorrichtung (1) nach Anspruch 3, **dadurch gekennzeichnet, dass** die Befestigungseinrichtungen Bohrungen (15) in den Speichen (14) der Speichenräder (13) sind.

5. Transport- und Verlegevorrichtung (1) nach einem der vorhergehenden Ansprüche, **dadurch gekennzeichnet, dass** die Tragarme (10) längsverstellbar, insbesondere teleskopierbar ausgebildet sind.

6. Transport- und Verlegevorrichtung (1) nach einem der vorhergehenden Ansprüche, **dadurch gekennzeichnet, dass** die Anlagerollen (7) entfernbar und abstandsveränderbar zur Fahrgestellmitte an der Haltekonstruktion (3) befestigt sind.

7. Transport- und Verlegevorrichtung (1) nach einem der vorhergehenden Ansprüche, **dadurch gekennzeichnet, dass** die Anlagerollen (7) mit Gerüstschellen an der Haltekonstruktion (3) befestigt sind.

8. Transport- und Verlegevorrichtung (1) nach einem der vorhergehenden Ansprüche, **dadurch gekennzeichnet, dass** das Fahrgestell (2) als Anhänger mit Anhängerkupplung ausgebildet ist.

9. Transport- und Verlegevorrichtung (1) nach einem der vorhergehenden Ansprüche, **dadurch gekennzeichnet, dass** der Radius der seitlichen Räder (13) größer ist als der Radius des Kreises, auf dem die Querstangen (16) um die Achse (17) angeordnet sind.
